# EUROPEAN PATENT APPLICATION

(11) **EP 3 575 563 A1**
(43) Date of publication of application: **04.12.2019**
(21) Application number: 19161042.7
(22) Date of filing: 06.03.2019
(51) Int. Cl.: F01K 23/02, F01K 23/06, F22B 37/10

(54) **THERMAL ENERGY RECOVERY DEVICE**

(30) Priority: 29.05.2018 JP 2018102281
(71) Applicant: Kabushiki Kaisha Kobe Seiko Sho (Kobe Steel, Ltd.), Kobe-shi, Hyogo 651-8585 (JP)
(72) Inventor: ADACHI, Shigeto, Takasago-shi,, Hyogo 676-8670 (JP); NARUKAWA, Yutaka, Takasago-shi,, Hyogo 676-8670 (JP); NISHIMURA, Kazumasa, Takasago-shi,, Hyogo 676-8670 (JP); ARAHIRA, Kazuya, Takasago-shi,, Hyogo 676-8670 (JP)
(74) Representative: TBK

(57) **Abstract**

The present invention is to provide a thermal energy recovery device capable of recovering heat from the supercharged air while avoiding an increase in a pressure loss generated in the supercharged air.

The thermal energy recovery device includes an evaporation portion, an evaporation-portion housing portion, a cooling portion, a cooling-portion housing portion, an expander, a power recovery unit, a condenser, and a circulation pump, wherein the evaporation portion has a working medium heat transfer tube, and plural evaporation portion fins, the cooling portion has a cooling medium heat transfer tube, and plural cooling portion fins, the cooling-portion housing portion is connected to the evaporation-portion housing portion, size of the evaporation-portion housing portion in the width direction is the same as size of the cooling-portion housing portion in the width direction, and size between the evaporation portion fins is the same as size between the cooling portion fins.

## Description

### BACKGROUND OF THE INVENTION

### (FIELD OF THE INVENTION)

The present invention relates to a thermal energy recovery device.

### (DESCRIPTION OF THE RELATED ART)

Conventionally, a thermal energy recovery device that recovers heat of the supercharged air supplied from a supercharger to an engine is known. For example, JP 2015-200181 A discloses a vessel including an exhaust heat recovery device (thermal energy recovery device) that recovers heat of the supercharged air via a working medium. This vessel includes an engine, a supercharger having a turbine and a compressor, the exhaust heat recovery device, and a gas cooler. The exhaust heat recovery device includes a heater that exchanges heat between the supercharged air and the working medium, an expander that generates motive power from thermal energy received by the working medium in the heater from the supercharged air, and a power generator connected to this expander. The heater is provided in an air supply line connecting the compressor and the engine. The gas cooler is provided in a part of the air supply line on the downstream side of the heater, and cools the supercharged air flowing out of the heater.

In the vessel described in JP 2015-200181 A, although the heat of the supercharged air supplied from the supercharger to the engine is effectively recovered by the exhaust heat recovery device, the heater is provided in a part of the air supply line on the upstream side of the gas cooler. Thus, in comparison to a case where the heater is not provided, a pressure loss generated in the supercharged air is increased.

An object of the present invention is to provide a thermal energy recovery device capable of recovering heat from the supercharged air while avoiding an increase in a pressure loss generated in the supercharged air.

### SUMMARY OF THE INVENTION

In order to achieve the above object, a thermal energy recovery device according to the present invention includes an evaporation portion provided in an air supply line for supplying the supercharged air discharged from a supercharger to an engine, the evaporation portion that evaporates a working medium by exchanging heat between the supercharged air and the working medium, an evaporation-portion housing portion that houses the evaporation portion so that thermal contact is enabled between the supercharged air and the evaporation portion, a cooling portion provided in a part of the air supply line on the downstream side of the evaporation portion, the cooling portion that cools the supercharged air by exchanging heat between the supercharged air passing through the evaporation portion and a cooling medium, a cooling-portion housing portion that houses the cooling portion so that thermal contact is enabled between the supercharged air passing through the evaporation portion and the cooling portion, an expander that expands the working medium flowing out of the evaporation portion, a power recovery unit connected to the expander, a condenser that condenses the working medium flowing out of the expander, and a circulation pump that feeds the working medium flowing out of the condenser to the evaporation portion. The evaporation portion has a working medium heat transfer tube through which the working medium flows, and plural evaporation portion fins provided in the working medium heat transfer tube in a state where the evaporation portion fins are separated from each other along the longitudinal direction of the working medium heat transfer tube, the evaporation portion fins being formed in a flat plate shape. The cooling portion has a cooling medium heat transfer tube through which the cooling medium flows, and plural cooling portion fins provided in the cooling medium heat transfer tube in a state where the cooling portion fins are separated from each other along the longitudinal direction of the cooling medium heat transfer tube, the cooling portion fins being formed in a flat plate shape. The cooling-portion housing portion is connected to the evaporation-portion housing portion so that the inside of the cooling-portion housing portion communicates with the inside of the evaporation-portion housing portion, size of the evaporation-portion housing portion in the width direction in which the plural evaporation portion fins are aligned is the same as size of the cooling-portion housing portion in the width direction, and size between the evaporation portion fins is the same as size between the cooling portion fins.

With this thermal energy recovery device, the inside of the evaporation-portion housing portion communicates with the inside of the cooling-portion housing portion, the size of the housing portions in the width direction are the same, and the size between the evaporation portion fins is the same as the size between the cooling portion fins. Thus, resistance when the supercharged air flows through the inside of the housing portions is reduced. Therefore, avoidance of an increase in a pressure loss generated in the supercharged air which is supplied to the engine is compatible with effective recovery of heat of the supercharged air.

In this case, the working medium heat transfer tube may be arranged so as to run in a zigzag way in the evaporation-portion housing portion. The evaporation portion fins may be formed in a plate shape extending from a tube portion of the working medium heat transfer tube arranged on the most upstream side in the direction in which the supercharged air flows to a tube portion arranged on the most downstream side. The cooling medium heat transfer tube may be arranged so as to run in a zigzag way in the cooling-portion housing portion. The cooling portion fins may be formed in a plate shape extending from a tube portion of the cooling medium heat transfer tube arranged on the most upstream side in the direction in which the supercharged air flows to a tube portion arranged on the most downstream side.

In this aspect, the pressure loss generated in the supercharged air is more reduced.

Further, the number of the evaporation portion fins may be the same as the number of the cooling portion fins, and the evaporation portion fins and the cooling portion fins may be respectively provided on the identical plane.

By doing so, the pressure loss generated in the supercharged air is further reduced.

The thermal energy recovery device may further include coupling members that couple the evaporation portion fins and the cooling portion fins on the identical plane. In this case, the coupling members may have a shape to block a flow passage running from a space between the adjacent evaporation portion fins to a space between the cooling portion fins positioned on the downstream side of the space in the direction in which the supercharged air flows from a flow passage adjacent to the flow passage, and may be made of a material having a heat insulating property.

By doing so, since one flow passage formed between the fins is blocked from the adjacent flow passage, the pressure loss generated in the supercharged air is further reduced. Since the coupling members are made of the material having the heat insulating property, cooling of the working medium by transferring cold heat of the cooling medium to the working medium flowing through the inside of the working medium heat transfer tube via the coupling members and the evaporation portion fins, that is, reduction of a motive power recovery amount in the power recovery unit is suppressed.

The evaporation-portion housing portion and the cooling-portion housing portion may be integrated.

By doing so, a task of connecting the two housing portions is omitted.

The thermal energy recovery device may further include an adjustment portion that adjusts a flow of the cooling medium. In this case, the cooling medium heat transfer tube may have a first cooling tube through which part of the cooling medium flows, and a second cooling tube through which the remaining part of the cooling medium flows. The plural cooling portion fins may have plural first cooling fins provided in the first cooling tube, and plural second cooling fins provided in the second cooling tube. The adjustment portion may set a first state where the cooling medium flows only through the first cooling tube while heat is exchanged between the working medium and the supercharged air in the evaporation portion, and switch from the first state to a second state where the cooling medium flows both through the first cooling tube and the second cooling tube when receiving a stop signal which indicates that heat exchange between the working medium and the supercharged air in the evaporation portion is stopped.

In this aspect, while heat is exchanged between the working medium and the supercharged air in the evaporation portion (at the time of a steady operation), the supercharged air is effectively cooled by the working medium flowing through the working medium heat transfer tube and the cooling medium flowing through the first cooling tube, and at the time of stoppage of the heat exchange (for example, at the time of stoppage of the circulation pump), the supercharged air is effectively cooled by both the cooling medium flowing through the first cooling tube and the cooling medium flowing through the second cooling tube.

Further, the second cooling tube may be arranged between tube portions of the working medium heat transfer tube, the tube portions being adjacent to each other in the direction in which the supercharged air flows. In this case, the second cooling fins may be separated from the first cooling fins and connected to the evaporation portion fins.

By doing so, cooling of the working medium by transferring cold heat of the cooling medium to the working medium flowing through the inside of the working medium heat transfer tube via the second cooling fins and the evaporation portion fins during cooling of the supercharged air by the first cooling tube at the time of the steady operation, that is, reduction of the motive power recovery amount in the power recovery unit is suppressed, and manufacture of the evaporation portion fins and the second cooling fins is simplified.

A thermal energy recovery device according to the present invention includes an evaporation portion provided in an air supply line for supplying the supercharged air discharged from a supercharger to an engine, the evaporation portion that evaporates a working medium by exchanging heat between the supercharged air and the working medium, an evaporation-portion housing portion that houses the evaporation portion so that thermal contact is enabled between the supercharged air and the evaporation portion, a cooling portion provided in a part of the air supply line on the downstream side of the evaporation portion, the cooling portion that cools the supercharged air by exchanging heat between the supercharged air passing through the evaporation portion and a cooling medium, a cooling-portion housing portion that houses the cooling portion so that thermal contact is enabled between the supercharged air passing through the evaporation portion and the cooling portion, an expander that expands the working medium flowing out of the evaporation portion, a power recovery unit connected to the expander, a condenser that condenses the working medium flowing out of the expander, a circulation pump that feeds the working medium flowing out of the condenser to the evaporation portion, and an adjustment portion that adjusts a flow of the cooling medium. The cooling portion has a first cooling tube through which part of the cooling medium flows, and a second cooling tube through which the remaining part of the cooling medium flows. The adjustment portion sets a first state where the cooling medium flows only through the first cooling tube while heat is exchanged between the working medium and the supercharged air in the evaporation portion, and switches from the first state to a second state where the cooling medium flows both through the first cooling tube and the second cooling tube when receiving a stop signal which indicates that heat exchange between the working medium and the supercharged air in the evaporation portion is stopped.

As described above, according to the present invention, it is possible to provide the thermal energy recovery device capable of recovering heat from the supercharged air while avoiding the increase in the pressure loss generated in the supercharged air.

### BRIEF DESCRIPTION OF THE DRAWINGS

FIG. 1 is a schematic view showing a configuration of a thermal energy recovery device of a first embodiment of the present invention.
FIG. 2 is a schematic view showing a modified example of an evaporation portion and a cooling portion of the thermal energy recovery device of the first embodiment.
FIG. 3 is a schematic view showing a modified example of the evaporation portion and the cooling portion of the thermal energy recovery device of the first embodiment.
FIG. 4 is a schematic view showing a configuration of a thermal energy recovery device of a second embodiment of the present invention.
FIG. 5 is a flowchart showing control contents of an adjustment portion.
FIG. 6 is a schematic view showing a modified example of an evaporation portion and a cooling portion of the thermal energy recovery device of the second embodiment.
FIG. 7 is a view showing an example of a section of the evaporation portion and the cooling portion shown in FIG. 6.

### DESCRIPTION OF THE PREFERRED EMBODIMENTS

Hereinafter, preferred embodiments of the present invention will be described with reference to the drawings.

### (First Embodiment)

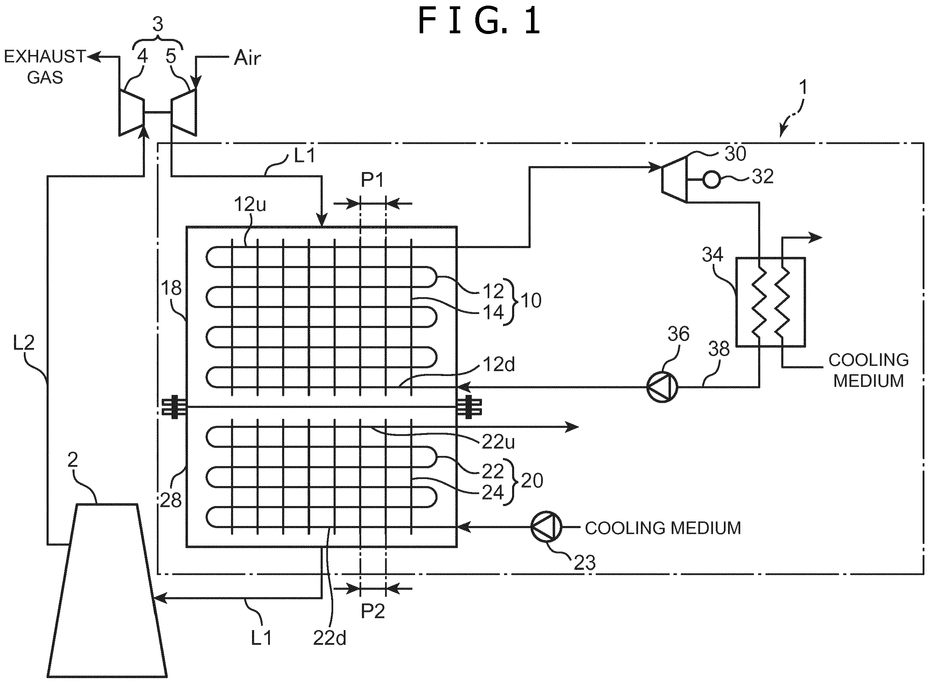

A thermal energy recovery device 1 of a first embodiment of the present invention will be described with reference to FIG. 1. This thermal energy recovery device 1 is a device that generates motive power by recovering heat from the supercharged air supplied to an engine 2. In the present embodiment, the thermal energy recovery device 1 is mounted on a vessel having the engine 2 and a supercharger 3. The supercharger 3 has a turbine 4 to be driven by exhaust gas discharged from the engine 2, and a compressor 5 connected to the turbine 4, the compressor that discharges the supercharged air for supplying to the engine 2. The supercharged air discharged from the compressor 5 is supplied to the engine 2 through an air supply line L1 connecting the compressor 5 and the engine 2. The exhaust gas discharged from the engine 2 is supplied to the turbine 4 through an exhaust line L2 connecting the engine 2 and the turbine 4.

As shown in FIG. 1, the thermal energy recovery device 1 includes an evaporation portion 10, an evaporation-portion housing portion 18, a cooling portion 20, a cooling-portion housing portion 28, an expander 30, a power recovery unit 32, a condenser 34, a circulation pump 36, and a circulation flow passage 38. The circulation flow passage 38 connects the evaporation portion 10, the expander 30, the condenser 34, and the circulation pump 36 in this order.

The evaporation portion 10 is provided in the air supply line L1. The evaporation portion 10 evaporates a working medium by exchanging heat between the supercharged air discharged from the compressor 5 and the working medium (such as R245fa). Details of the evaporation portion 10 will be described later.

The evaporation-portion housing portion 18 houses the evaporation portion 10 so that thermal contact is enabled between the supercharged air and the evaporation portion 10. Specifically, the inside of the evaporation-portion housing portion 18 forms a flow passage of the supercharged air.

The expander 30 is provided in a part of the circulation flow passage 38 on the downstream side of the evaporation portion 10. The expander 30 expands the gas-phase working medium flowing out of the evaporation portion 10. In the present embodiment, a positive displacement screw expander having a rotor to be driven to rotate by expansion energy of the gas-phase working medium is used as the expander 30.

The power recovery unit 32 is connected to the expander 30. The power recovery unit 32 recovers the motive power from the working medium by rotating following driven of the expander 30. In the present embodiment, a power generator is used as the power recovery unit 32. A compressor, etc. may be used as the power recovery unit 32.

The condenser 34 is provided in a part of the circulation flow passage 38 on the downstream side of the expander 30. The condenser 34 condenses the working medium by exchanging heat between the working medium flowing out of the expander 30 and a cooling medium (seawater, etc.)

The circulation pump 36 is provided in a part of the circulation flow passage 38 on the downstream side of the condenser 34 (in a part between the condenser 34 and the evaporation portion 10). The circulation pump 36 feeds the liquid-phase working medium flowing out of the condenser 34 to the evaporation portion 10.

The evaporation portion 10 will be described in detail. The evaporation portion 10 has a working medium heat transfer tube 12 through which the working medium flows, and plural evaporation portion fins 14 provided in the working medium heat transfer tube 12.

The working medium heat transfer tube 12 is arranged so as to run in a zigzag way in the evaporation-portion housing portion 18. Specifically, the working medium heat transfer tube 12 has plural tube portions respectively having a shape extending in a linear shape, and curved portions connecting end portions of the tube portions, and are arranged in the evaporation-portion housing portion 18 so that the tube portions are aligned along the direction orthogonal to the axial directions of the tube portions (the direction in which the supercharged air flows).

The evaporation portion fins 14 are formed in a flat plate shape. The evaporation portion fins 14 are provided in the tube portions in a state where the evaporation portion fins are separated from each other along the longitudinal direction of the tube portions of the working medium heat transfer tube 12. Specifically, the evaporation portion fins 14 are provided in the tube portions so that size P1 between the adjacent evaporation portion fins 14 is equal. In the present embodiment, the evaporation portion fins 14 are formed in a plate shape extending from a tube portion 12u of the working medium heat transfer tube 12 arranged on the most upstream side in the direction in which the supercharged air flows (the direction orthogonal to the axial direction of the tube portion) to a tube portion 12d arranged on the most downstream side.

The cooling portion 20 is provided in a part of the air supply line L1 on the downstream side of the evaporation portion 10. The cooling portion 20 cools the supercharged air by exchanging heat between the supercharged air passing through the evaporation portion 10 and the cooling medium (seawater, etc.) Specifically, the cooling portion 20 has a cooling medium heat transfer tube 22 through which the cooling medium flows, and plural cooling portion fins 24 provided in the cooling medium heat transfer tube 22.

The cooling-portion housing portion 28 houses the cooling portion 20 so that thermal contact is enabled between the supercharged air and the cooling portion 20. Specifically, the inside of the cooling-portion housing portion 28 forms a flow passage of the supercharged air. The cooling-portion housing portion 28 is connected to the evaporation-portion housing portion 18 so that the inside of the cooling-portion housing portion 28 communicates with the inside of the evaporation-portion housing portion 18. In the present embodiment, the evaporation-portion housing portion 18 and the cooling-portion housing portion 28 are connected by a flange. Size of the evaporation-portion housing portion 18 in the width direction (in which the plural evaporation portion fins 14 are aligned) is the same as size of the cooling-portion housing portion 28 in the width direction.

The cooling medium heat transfer tube 22 is arranged so as to run in a zigzag way in the cooling-portion housing portion 28. Specifically, the cooling medium heat transfer tube 22 has plural tube portions respectively having a shape extending in a linear shape, and curved portions connecting end portions of the tube portions, and are arranged in the cooling-portion housing portion 28 so that the tube portions are aligned along the direction orthogonal to the axial directions of the tube portions (the direction in which the supercharged air flows). To this cooling medium heat transfer tube 22, the cooling medium is supplied by a cooling medium pump 23 provided in a cooling medium supply flow passage which is connected to the cooling medium heat transfer tube 22.

The cooling portion fins 24 are formed in a flat plate shape. The cooling portion fins 24 are provided in the tube portions in a state where the cooling portion fins are separated from each other along the longitudinal direction of the tube portions of the cooling medium heat transfer tube 22. Specifically, the cooling portion fins 24 are provided in the tube portions so that size P2 between the adjacent cooling portion fins 24 is equal to the size P1 between the evaporation portion fins 14. In the present embodiment, the cooling portion fins 24 are formed in a plate shape extending from a tube portion 22u of the cooling medium heat transfer tube 22 arranged on the most upstream side in the direction in which the supercharged air flows (the direction orthogonal to the axial direction of the tube portion) to a tube portion 22d arranged on the most downstream side. The cooling portion fins 24 are arranged on the identical plane to the evaporation portion fins 14. The number of the cooling portion fins 24 is set to be the same as the number of the evaporation portion fins 14.

As described above, with the thermal energy recovery device 1 of the present embodiment, the inside of the evaporation-portion housing portion 18 communicates with the inside of the cooling-portion housing portion 28, the size of the housing portions 18, 28 in the width direction are the same, and the size P1 between the evaporation portion fins 14 is the same as the size P2 between the cooling portion fins 24. Thus, resistance when the supercharged air flows through the inside of the housing portions 18, 28 is reduced. Therefore, avoidance of an increase in a pressure loss generated in the supercharged air which is supplied to the engine 2 is compatible with effective recovery of heat of the supercharged air.

The evaporation portion fins 14 and the cooling portion fins 24 are respectively formed in a plate shape. Thus, the pressure loss generated in the supercharged air is more reduced.

Further, the evaporation portion fins 14 and the cooling portion fins 24 are respectively provided on the identical plane. Thus, the pressure loss generated in the supercharged air is further reduced.

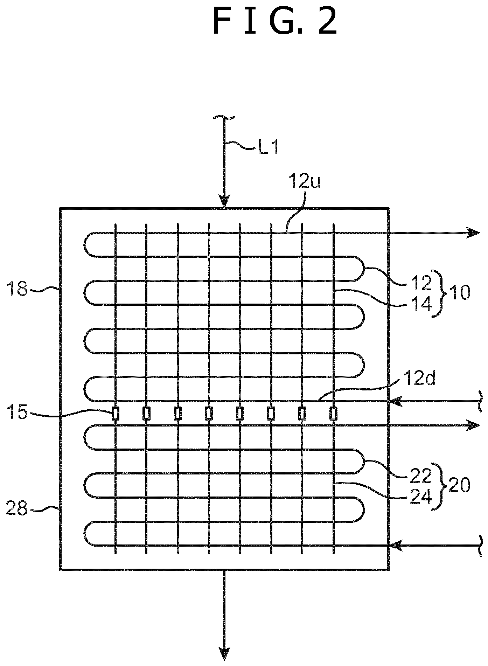

As shown in FIG. 2, the thermal energy recovery device 1 may further have plural coupling members 15. Each of the coupling members 15 couples each of the evaporation portion fins 14 and each of the cooling portion fins 24 on the identical plane. The coupling members 15 have a shape to block a flow passage running from a space between the adjacent evaporation portion fins 14 to a space between the cooling portion fins 24 positioned on the downstream side of the space in the direction in which the supercharged air flows from a flow passage adjacent to the flow passage, and are made of a material having a heat insulating property (such as ceramic). In this aspect, since one flow passage formed between the fins 14, 24 is blocked from the adjacent flow passage, the pressure loss generated in the supercharged air is further reduced. Since the coupling members 15 are made of the material having the heat insulating property, cooling of the working medium by transferring cold heat of the cooling medium flowing through the inside of the cooling medium heat transfer tube 22 to the working medium flowing through the inside of the working medium heat transfer tube 12 via the coupling members 15 and the evaporation portion fins 14, that is, reduction of a motive power recovery amount in the power recovery unit 32 is suppressed.

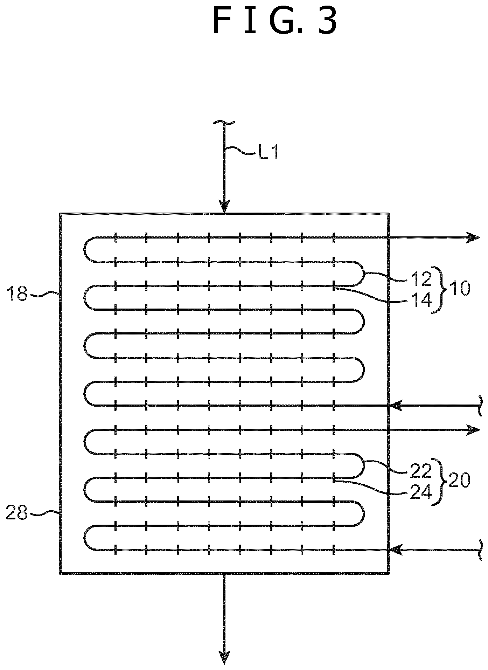

Alternatively, as shown in FIG. 3, the evaporation portion fins 14 and the cooling portion fins 24 may be formed not in a plate shape but in a shape to be separated from the fins 14, 24 provided in the tube portions adjacent to the tube portions where the above fins 14, 24 are provided.

As shown in FIGS. 2 and 3, the evaporation-portion housing portion 18 and the cooling-portion housing portion 28 may be integrated (as a single casing). In this aspect, a task of connecting the two housing portions 18, 28 is omitted.

### (Second Embodiment)

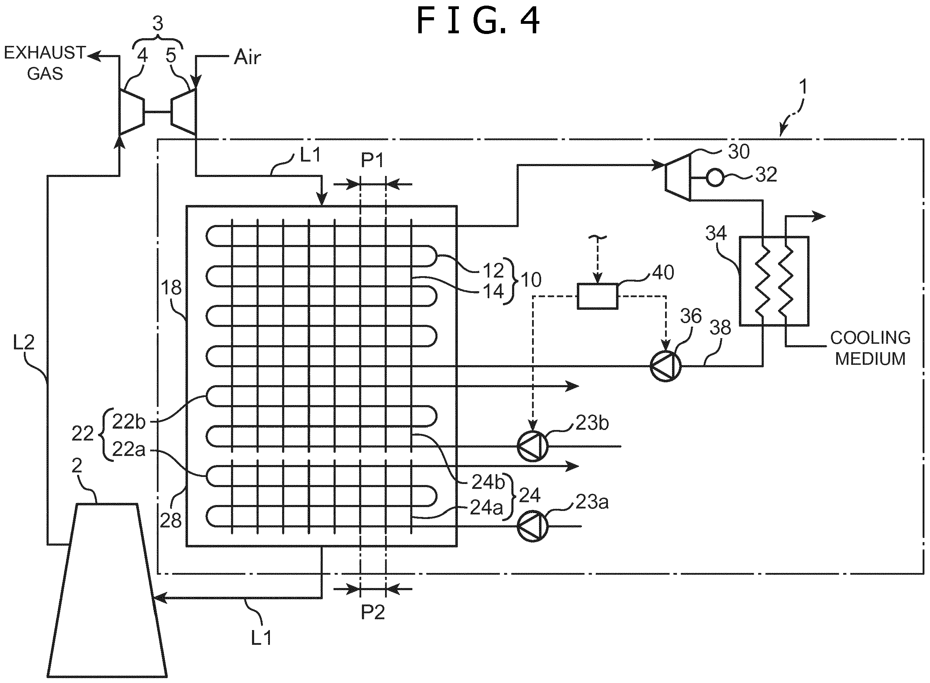

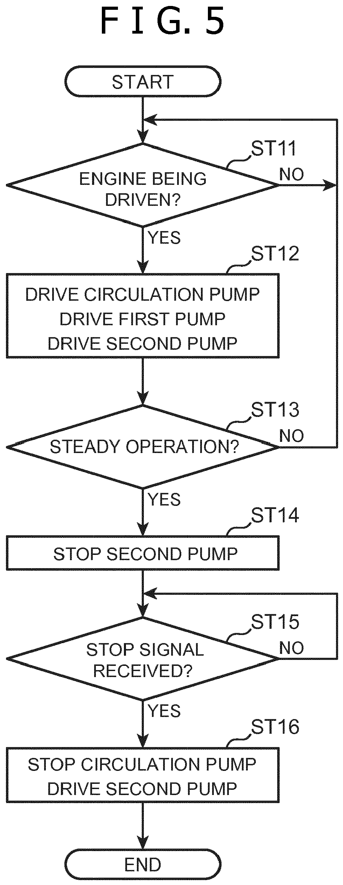

Next, with reference to FIGS. 4 and 5, a thermal energy recovery device 1 of a second embodiment of the present invention will be described. In the second embodiment, only parts different from the first embodiment will be described, and description of the same structures, operations, and effects as the first embodiment will not be described.

In the present embodiment, a cooling medium heat transfer tube 22 has two flow passages, and a flow rate of a cooling medium flowing through each of the flow passages is adjustable. Specifically, the cooling medium heat transfer tube 22 has a first cooling tube 22a through which part of the cooling medium flows, and a second cooling tube 22b through which the remaining part of the cooling medium flows. The cooling medium is supplied to the first cooling tube 22a by a first pump 23a provided in a first cooling medium supply flow passage which is connected to the first cooling tube 22a. The cooling medium is supplied to the second cooling tube 22b by a second pump 23b provided in a second cooling medium supply flow passage which is connected to the second cooling tube 22b.

Each of cooling portion fins 24 has a first cooling fin 24a provided in the first cooling tube 22a, and a second cooling fin 24b provided in the second cooling tube 22b. The second cooling fins 24b are separated from the first cooling fins 24a and connected to the evaporation portion fins 14.

The thermal energy recovery device 1 of the present embodiment further includes an adjustment portion 40 that adjusts a flow of the cooling medium flowing through the cooling tubes 22a, 22b. The adjustment portion 40 sets a first state where the cooling medium flows only through the first cooling tube 22a while heat is exchanged between a working medium and the supercharged air in an evaporation portion 10 (at the time of a steady operation), and switches from the first state to a second state where the cooling medium flows both through the first cooling tube 22a and the second cooling tube 22b when receiving a stop signal which indicates that heat exchange between the working medium and the supercharged air in the evaporation portion 10 is stopped (for example, a signal to stop the circulation pump 36). In the present embodiment, the adjustment portion 40 drives only the first pump 23a (stops the second pump 23b) at the time of the steady operation, and drives the second pump 23b when receiving the stop signal.

Hereinafter, control contents by the adjustment portion 40 will be described with reference to FIG. 5.

First, the adjustment portion 40 determines whether or not the engine 2 is being driven (Step ST11). In a case where the engine 2 is not being driven as a result, the adjustment portion determines whether or not the engine 2 is being driven again, and in a case where the engine 2 is being driven, drives the circulation pump 36, the first pump 23a, and the second pump 23b (Step ST12). Thereby, cooling of the supercharged air by the working medium and the cooling medium is started, and recovery of motive power in a power recovery unit 32 is started.

Next, the adjustment portion 40 determines whether or not it is a steady operation state (for example, whether or not the recovery amount of the motive power in the power recovery unit 32 is stabilized) (Step ST13). When it is not the steady operation state as a result, the flow is returned to Step ST11 again. When it is the steady operation state, the adjustment portion 40 stops the second pump 23b (sets the first state) (Step ST14). Thereby, the supercharged air is cooled only by the working medium flowing through a working medium heat transfer tube 12 and the cooling medium flowing through the first cooing tube 22a. The supercharged air is sufficiently cooled in the evaporation portion 10. Thus, even when the second pump 23b is stopped, a temperature of the supercharged air supplied to the engine 2 is sufficiently lowered.

After that, the adjustment portion 40 determines whether or not the stop signal is received (Step ST15). In a case where the stop signal is not received as a result, the adjustment portion determines whether or not the stop signal is received again. Meanwhile, in a case where the stop signal is received, the adjustment portion stops the circulation pump 36 and drives the second pump 23b (switches to the second state) (Step ST16). Thereby, the supercharged air is cooled only by the cooling medium flowing through the first cooling tube 22a and the cooling medium flowing through the second cooing tube 22b.

As described above, with the thermal energy recovery device 1 of the present embodiment, while heat is exchanged between the working medium and the supercharged air in the evaporation portion 10 (at the time of the steady operation), the supercharged air is effectively cooled by the working medium flowing through the working medium heat transfer tube 12 and the cooling medium flowing through the first cooling tube 22a, and at the time of stoppage of the heat exchange (for example, at the time of stoppage of the circulation pump), the supercharged air is effectively cooled by both the cooling medium flowing through the first cooling tube 22a and the cooling medium flowing through the second cooling tube 22b.

The second cooling fins 24b are separated from the first cooling fins 24a and connected to the evaporation portion fins 14. Thus, cooling of the working medium by transferring cold heat of the cooling medium to the working medium flowing through the inside of the working medium heat transfer tube 12 via the second cooling fins 24b and the evaporation portion fins 14 during cooling of the supercharged air by the first cooling tube 22a at the time of the steady operation, that is, reduction of the motive power recovery amount in the power recovery unit 32 is suppressed, and manufacture of the evaporation portion fins 14 and the second cooling fins 24b is simplified.

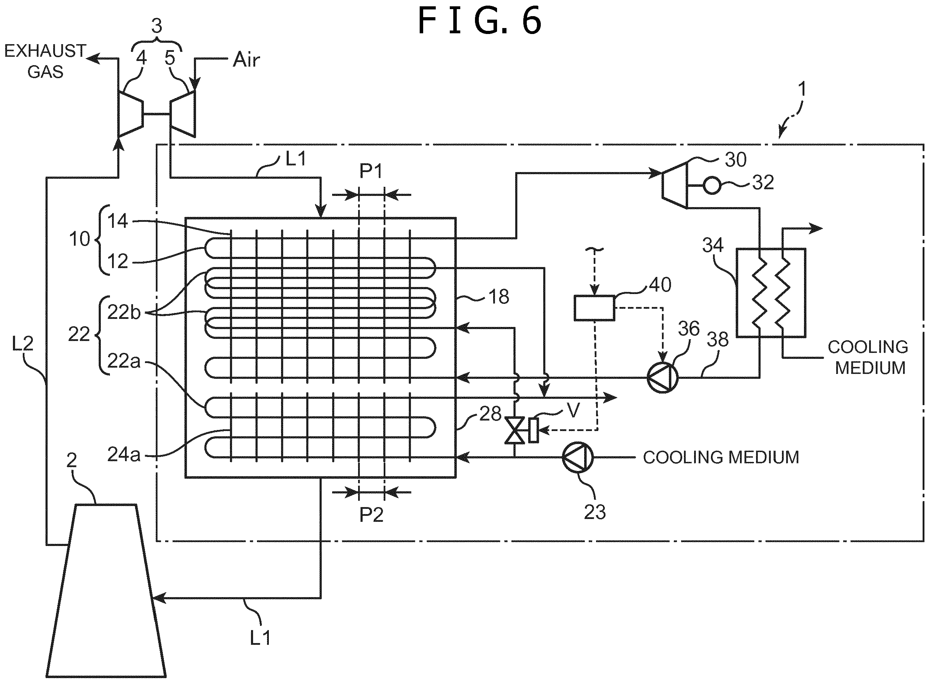

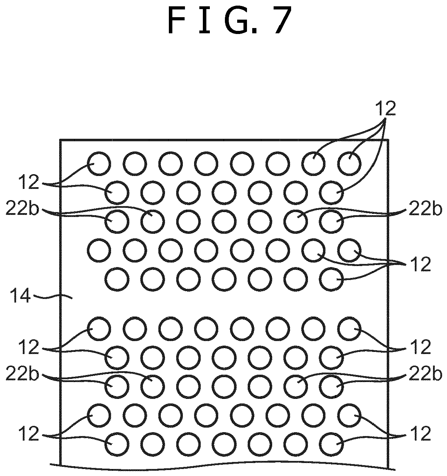

As shown in FIGS. 6 and 7, the second cooling tube 22b may be assembled between the tube portions of the working medium heat transfer tube 12. In this case, part of the evaporation portion fins 14 forms the second cooling fins 24b. FIG. 7 shows an example of arrangement of the working medium heat transfer tube 12 and the second cooling tube 22b.

As shown in FIG. 6, the second cooling tube 22b may branch from the first cooling tube 22a. In this case, the adjustment portion 40 switches between the first state and the second state by switching between opening and closing of an ON/OFF valve V provided in the second cooling tube 22b.

It should be thought that the embodiments disclosed herein are not limitations but examples in all respects. The scope of the present invention is indicated not by the above description of the embodiments but by the claims, and further, equivalent meanings to the claims and all modifications within the scope are included.

For example, the number of the evaporation portion fins 14 may be different from the number of the cooling portion fins 24.

In the second embodiment, the second cooling fins 24b may be separated from the evaporation portion fins 14 and connected to the first cooling fins 24a.

The present invention is to provide a thermal energy recovery device capable of recovering heat from the supercharged air while avoiding an increase in a pressure loss generated in the supercharged air.

The thermal energy recovery device includes an evaporation portion, an evaporation-portion housing portion, a cooling portion, a cooling-portion housing portion, an expander, a power recovery unit, a condenser, and a circulation pump, wherein the evaporation portion has a working medium heat transfer tube, and plural evaporation portion fins, the cooling portion has a cooling medium heat transfer tube, and plural cooling portion fins, the cooling-portion housing portion is connected to the evaporation-portion housing portion, size of the evaporation-portion housing portion in the width direction is the same as size of the cooling-portion housing portion in the width direction, and size between the evaporation portion fins is the same as size between the cooling portion fins.

## Claims

1. A thermal energy recovery device comprising:
an evaporation portion provided in an air supply line for supplying the supercharged air discharged from a supercharger to an engine, the evaporation portion that evaporates a working medium by exchanging heat between the supercharged air and the working medium;
an evaporation-portion housing portion that houses the evaporation portion so that thermal contact is enabled between the supercharged air and the evaporation portion;
a cooling portion provided in a part of the air supply line on the downstream side of the evaporation portion, the cooling portion that cools the supercharged air by exchanging heat between the supercharged air passing through the evaporation portion and a cooling medium;
a cooling-portion housing portion that houses the cooling portion so that thermal contact is enabled between the supercharged air passing through the evaporation portion and the cooling portion;
an expander that expands the working medium flowing out of the evaporation portion;
a power recovery unit connected to the expander;
a condenser that condenses the working medium flowing out of the expander; and
a circulation pump that feeds the working medium flowing out of the condenser to the evaporation portion, wherein
the evaporation portion has:
a working medium heat transfer tube through which the working medium flows; and
plural evaporation portion fins provided in the working medium heat transfer tube in a state where the evaporation portion fins are separated from each other along the longitudinal direction of the working medium heat transfer tube, the evaporation portion fins being formed in a flat plate shape,
the cooling portion has:
a cooling medium heat transfer tube through which the cooling medium flows; and
plural cooling portion fins provided in the cooling medium heat transfer tube in a state where the cooling portion fins are separated from each other along the longitudinal direction of the cooling medium heat transfer tube, the cooling portion fins being formed in a flat plate shape,
the cooling-portion housing portion is connected to the evaporation-portion housing portion so that the inside of the cooling-portion housing portion communicates with the inside of the evaporation-portion housing portion,
size of the evaporation-portion housing portion in the width direction in which the plural evaporation portion fins are aligned is the same as size of the cooling-portion housing portion in the width direction, and
size between the evaporation portion fins is the same as size between the cooling portion fins.

2. The thermal energy recovery device according to claim 1, wherein
the working medium heat transfer tube is arranged so as to run in a zigzag way in the evaporation-portion housing portion,
the evaporation portion fins are formed in a plate shape extending from a tube portion of the working medium heat transfer tube arranged on the most upstream side in the direction in which the supercharged air flows to a tube portion arranged on the most downstream side,
the cooling medium heat transfer tube is arranged so as to run in a zigzag way in the cooling-portion housing portion, and
the cooling portion fins are formed in a plate shape extending from a tube portion of the cooling medium heat transfer tube arranged on the most upstream side in the direction in which the supercharged air flows to a tube portion arranged on the most downstream side.

3. The thermal energy recovery device according to claim 2, wherein
the number of the evaporation portion fins is the same as the number of the cooling portion fins, and
the evaporation portion fins and the cooling portion fins are respectively provided on the identical plane.

4. The thermal energy recovery device according to claim 3, further comprising:
coupling members that couple the evaporation portion fins and the cooling portion fins on the identical plane, wherein
the coupling members have a shape to block a flow passage running from a space between the adjacent evaporation portion fins to a space between the cooling portion fins positioned on the downstream side of the space in the direction in which the supercharged air flows from a flow passage adjacent to the flow passage, and are made of a material having a heat insulating property.

5. The thermal energy recovery device according to any of claims 1 to 4, wherein
the evaporation-portion housing portion and the cooling-portion housing portion are integrated.

6. The thermal energy recovery device according to any of claims 2 to 4, further comprising:
an adjustment portion that adjusts a flow of the cooling medium, wherein
the cooling medium heat transfer tube has:
a first cooling tube through which part of the cooling medium flows; and
a second cooling tube through which the remaining part of the cooling medium flows,
the plural cooling portion fins have:
plural first cooling fins provided in the first cooling tube; and
plural second cooling fins provided in the second cooling tube, and
the adjustment portion sets a first state where the cooling medium flows only through the first cooling tube while heat is exchanged between the working medium and the supercharged air in the evaporation portion, and switches from the first state to a second state where the cooling medium flows both through the first cooling tube and the second cooling tube when receiving a stop signal which indicates that heat exchange between the working medium and the supercharged air in the evaporation portion is stopped.

7. The thermal energy recovery device according to claim 6, wherein
the second cooling tube is arranged between tube portions of the working medium heat transfer tube, the tube portions being adjacent to each other in the direction in which the supercharged air flows, and
the second cooling fins are separated from the first cooling fins and connected to the evaporation portion fins.

8. A thermal energy recovery device comprising:
an evaporation portion provided in an air supply line for supplying the supercharged air discharged from a supercharger to an engine, the evaporation portion that evaporates a working medium by exchanging heat between the supercharged air and the working medium;
an evaporation-portion housing portion that houses the evaporation portion so that thermal contact is enabled between the supercharged air and the evaporation portion;
a cooling portion provided in a part of the air supply line on the downstream side of the evaporation portion, the cooling portion that cools the supercharged air by exchanging heat between the supercharged air passing through the evaporation portion and a cooling medium;
a cooling-portion housing portion that houses the cooling portion so that thermal contact is enabled between the supercharged air passing through the evaporation portion and the cooling portion;
an expander that expands the working medium flowing out of the evaporation portion;
a power recovery unit connected to the expander;
a condenser that condenses the working medium flowing out of the expander;
a circulation pump that feeds the working medium flowing out of the condenser to the evaporation portion; and
an adjustment portion that adjusts a flow of the cooling medium, wherein
the cooling portion has:
a first cooling tube through which part of the cooling medium flows; and
a second cooling tube through which the remaining part of the cooling medium flows, and
the adjustment portion sets a first state where the cooling medium flows only through the first cooling tube while heat is exchanged between the working medium and the supercharged air in the evaporation portion, and switches from the first state to a second state where the cooling medium flows both through the first cooling tube and the second cooling tube when receiving a stop signal which indicates that heat exchange between the working medium and the supercharged air in the evaporation portion is stopped.
